# EUROPEAN PATENT APPLICATION

(11) **EP 4 744 971 A1**
(43) Date of publication of application: **20.05.2026**
(21) Application number: 24839419.9
(22) Date of filing: 17.06.2024
(51) Int. Cl.: B60R 21/207, B60R 21/233, B60R 21/2346

(54) **VEHICLE SIDE AIRBAG DEVICE**

(30) Priority: 10.07.2023 JP 2023112869
(71) Applicant: Autoliv Development AB, 447 83 Vårgårda (SE)
(72) Inventor: SHIBUYA, Takaki, Yokohama-shi, Kanagawa 222-8580 (JP); KOBAYASHI, Yuto, Yokohama-shi, Kanagawa 222-8580 (JP)
(74) Representative: Müller Verweyen
(86) International application number: PCT/JP2024/021820
(87) International publication number: WO 2025/013523

(57) **Abstract**

A vehicular side airbag device is provided that has a simple structure and is capable of improving occupant restraint performance. RESOLUTION MEANS

An airbag cushion 112 of a side airbag device 100 includes:
a pre-push chamber 122 into which an inflator 114 is inserted;
an upper chamber 118 that expands and deploys at least partially in a range outside the pre-push chamber 122 in a width direction of a seat 102;
inner vents 144a and 144b that supply gas through the pre-push chamber 122 to the upper chamber 118;
a lower chamber 120 that receives gas through the pre-push chamber 122 and expands and deploys to at least a range below the upper chamber 118; and
a baffle 140 serving as a gas non-exchange partition part that demarcates the upper chamber 118 and the lower chamber 120 and prevents gas exchange between the upper chamber 118 and the lower chamber 120.

## Description

### TECHNICAL FIELD

The present invention relates to a vehicular side airbag device for restraining an occupant seated in a vehicle seat.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure.

There are various types of airbag devices depending on the installation site and application. For example, in the vehicle side airbag device disclosed in Patent Document 1 by the present applicant, the airbag cushion expands and deploys from the side of the seat into the gap between the occupant and the side of the vehicle, enabling restraint of the occupant from the side. In particular, the side airbag 4 in Patent Document 1 has a partition member 7 provided inside, which allows the thickness to be varied depending on the portion, enabling appropriate restraint of the skeletal strong chest and waist part as well as the weak abdominal area, respectively.

### RELATED ART DOCUMENTS

### PATENT DOCUMENTS

Patent Document 1: International Patent Publication No. 2014/123055

### SUMMARY OF THE INVENTION

### PROBLEM TO BE SOLVED BY THE INVENTION

Currently, there is demand for further improvement in occupant restraining performance of airbag cushions of vehicular side airbag devices. This can be effectively achieved by starting to restrain the occupant from an early stage of the airbag cushion expanding and deploying, and to restrain the occupant while suppressing the amount of movement of the occupant from the seat. In particular, measures are required that not only fully restrain the waist part, which is the heaviest part of the occupant's body, but also suppresses increase in costs.

In light of the foregoing, an object of the present invention is to provide a vehicular side airbag device that is capable of improving occupant restraint performance with a simple structure.

### MEANS FOR SOLVING THE PROBLEM

To resolve the problem described above, a typical configuration of a vehicle side airbag device according to the present invention includes:
an airbag module attached to a side frame of a seatback of a vehicle seat;
wherein
the airbag module includes:
   an airbag cushion attached to the side frame in a prescribed rolled or folded stowed form; and
   an inflator attached to the side frame in a state of being inserted into the airbag cushion,
   the airbag cushion includes:
      a pre-push chamber into which the inflator is inserted;
      an upper chamber that expands and deploys at least partially in a range outside the pre-push chamber in a width direction of the vehicle seat;
      an inner vent that supplies gas from the pre-push chamber to the upper chamber;
      a lower chamber that receives gas from the pre-push chamber and expands and deploys to at least a range below the upper chamber; and
      a gas non-exchange partition part that demarcates the upper chamber and the lower chamber and prevents gas exchange between the upper chamber and the lower chamber.

With the airbag cushion configured as described above, the pre-push chamber expands and deploys early to push the occupant back toward the center of the seat, and then the upper chamber and lower chamber expand and deploy, thereby efficiently restraining the occupant's body.

Furthermore, in the configuration described above, gas does not flow directly in either direction between the upper chamber and the lower chamber. In particular, the lower chamber does not have direct gas communication with the upper chamber, so the internal pressure can be maintained high without gas escaping to the upper chamber side, and the heavy waist part can be fully restrained. Therefore, with the configuration described above, the amount of movement of the occupant from the seat can be suppressed with a simple configuration and the occupant restraint performance of the airbag cushion can be improved.

The airbag cushion described above further includes:
a pre-push panel that forms outer surfaces of the pre-push chamber and the lower chamber on a width direction inward side of the vehicle seat;
a main panel that is disposed on the width direction outward side relative to the pre-push panel and forms outer surfaces of the upper chamber and the lower chamber on the width direction outward side; and
a partition panel that is disposed between the pre-push panel and the main panel and demarcates the pre-push chamber and the upper chamber.

With the configuration described above, the pre-push chamber, the upper chamber, and the lower chamber can be suitably formed using various panels.

The gas non-exchange partition part includes a baffle spanning between the main panel and the partition panel, the baffle demarcating the upper chamber and the lower chamber and preventing gas from passing therebetween.

By providing the baffle, a gas non-exchange partition part can be implemented and the internal pressure of the lower chamber can be maintained.

The airbag cushion described above may further include:
one or more upper panels that form the upper chamber;
one or more pre-push panels that are connected to the one or more upper panels from a width direction inward side of the vehicle seat and form the pre-push chamber; and
one or more lower panels that are connected to the one or more upper panels from the width direction inward side and form the lower chamber.

With the configuration described above as well, the pre-push chamber, the upper chamber, and the lower chamber can be suitably formed using various panels.

The airbag cushion described above may further include:
one or more lower panels that form the lower chamber;
one or more pre-push panels that are connected above the one or more lower panels from both width-direction sides of the vehicle seat and form the pre-push chamber; and
one or more upper panels that are connected above the one or more lower panels from the width direction outward side relative to the one or more pre-push panels and form the upper chamber in a state so as to enclose the pre-push chamber.

With the configuration described above as well, the pre-push chamber, the upper chamber, and the lower chamber can be suitably formed using various panels.

The airbag cushion described above may further include:
a diffuser provided in a state in which the inflator is enclosed within the pre-push chamber, one end of the diffuser being inserted into the lower chamber, and the diffuser being formed in a cylindrical shape; and
a check valve that is a surplus of the panel member provided at a first end of the diffuser to prevent backflow of gas.

According to the configuration described above, by providing a check valve at a first end of the diffuser on the lower chamber side, internal pressure of the lower chamber can be maintained in an appropriate manner.

### EFFECT OF THE INVENTION

The present invention can provide a vehicular side airbag device that is capable of improving occupant restraint performance with a simple configuration.

### BRIEF DESCRIPTION OF THE DRAWINGS

FIG. 1 is a diagram depicting a vehicular side airbag device according to an embodiment of the present invention;
FIG. 2 is a diagram independently depicting the airbag cushion of FIG. 1(b);
FIG. 3 is a diagram depicting a configuration of a panel member of the airbag cushion of FIG. 2(a);
FIG. 4 is a cross-sectional view of the airbag cushion of FIG. 3 along line A-A;
FIG. 5 is various cross-sectional views of the airbag cushion of FIG. 3(a);
FIG. 6 is a diagram depicting the positional relationship between the airbag cushion of FIG. 2(b) and an occupant;
FIG. 7 is a diagram depicting a modified example of the baffle in FIG. 3;
FIG. 8 is a diagram depicting Modified Example 1 of the airbag cushion in FIG. 3;
FIG. 9 is various cross-sectional views of the airbag cushion of FIG. 8(a);
FIG. 10 is a diagram depicting Modified Example 2 of the airbag cushion in FIG. 3;
FIG. 11 is various cross-sectional views of the airbag cushion of FIG. 10(a);
FIG. 12 is a diagram depicting Modified Example 3 of the airbag cushion in FIG. 3;
FIG. 13 is various cross-sectional views of the airbag cushion of FIG. 12(a);
FIG. 14 is a diagram depicting Modified Example 4 of the airbag cushion in FIG. 3;
FIG. 15 is various cross-sectional views of the airbag cushion of FIG. 14(a); and
FIG. 16 is a diagram depicting various modified examples of the diffuser in FIG. 5(a).

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

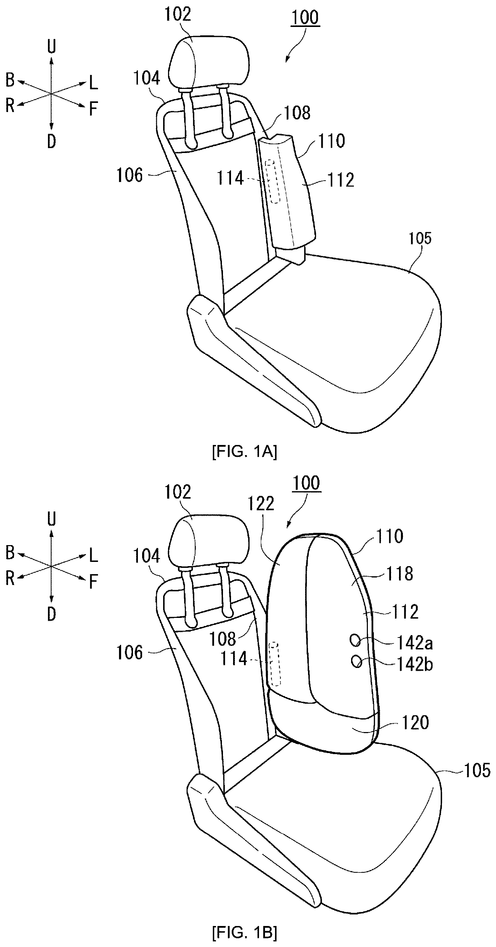

FIG. 1 is a diagram depicting the vehicular side airbag device (hereinafter, side airbag device 100) according to an embodiment of the present invention. FIG. 1(a) depicts an airbag cushion 112 prior to activation. The side airbag device 100 can be installed in any seat of the front row, rear row, or even on either the left or right side of the vehicle.

In the present embodiment, when an occupant is sitting in a vehicle seat 102 with a regular posture, the direction the occupant is facing is defined as forward, the opposite direction is backward, the right-hand side of the occupant is the right direction and the left-hand side of the occupant is the left direction. Furthermore, when the occupant is seated in a regular posture, the direction towards the head of the occupant is referred to as up, and the direction towards the legs of the occupant is referred to as down. In the drawings used in the description below, as necessary, the front, back, left, right, up, and down directions with reference to the occupant in a regular position described above are indicated by arrows F (Forward), B (Back), L (Left), R (Right), U (Up), and D (Down).

In FIG. 1(a), the skin or seat pad (for example, urethane material) of a seatback 104 of the seat 102 is omitted, and only a seat frame 106 is depicted. The seat frame 106 is a skeletal structure member equipped in the seatback 104.

An airbag module 110 is built into a side part of the seat 102 and is attached to, for example, a side frame 108 of the seat frame 106. A side frame 108 is a part of the seat frame 106 that extends along the left and right side surfaces of the seatback 104.

In the present embodiment, the airbag module 110 is attached to the side frame 108 on the left side in the width direction of the seatback 104. However, the airbag module 110 can also be attached to the side frame on the right side in the width direction of the seatback 104. In other words, the airbag module 110 can be installed either on a side part on a door side (near side) of the seat 102 that is closer to a collision point, or on a side part on a vehicle inner side (far side) that is farther from the collision point.

The airbag module 110 includes an airbag cushion 112 and an inflator 114. The airbag cushion 112 is a bag-shaped member that can be expanded with gas, and is attached to the side frame 108 in a prescribed stowed form by being rolled or folded. The airbag cushion 112 expands and deploys in the event of an emergency, such as when an impact occurs to the vehicle, to restrain an occupant seated in the seat 102.

The inflator 114 is a gas generating device that is electrically connected to a vehicle side that activates upon receiving a signal originating from the vehicle side detecting an impact, and that supplies gas to the airbag cushion 112. In the present embodiment, the inflator 114 used is a cylinder type. The inflator 114 is attached to the side frame 108 using a stud bolt (not depicted) in a state where the inflator is inserted into the airbag cushion 112 with the longitudinal direction thereof extending vertically along the side frame 108.

Examples of currently prevailing inflators include: types which are filled with a gas-generating agent and burn the agent to generate gas; types which are filled with compressed gas and supply gas without generating heat; hybrid types which utilize both combustion gas and compressed gas; and the like. Any of these types can be used for the inflator 114.

FIG. 1(b) is a diagram depicting a state after expansion and deployment of the airbag cushion 112 of FIG. 1(a). When the side airbag device 100 detects a collision via various sensors and a prescribed Electronic Control Unit (ECU), the airbag device activates the airbag module 110.

The inflator 114 ejects gas based on an activation signal sent from the ECU described above or the like. The airbag cushion 112 pushes the skin of the seatback 104 out of the way and expands and deploys into the cabin space by using gas from the inflator 114.

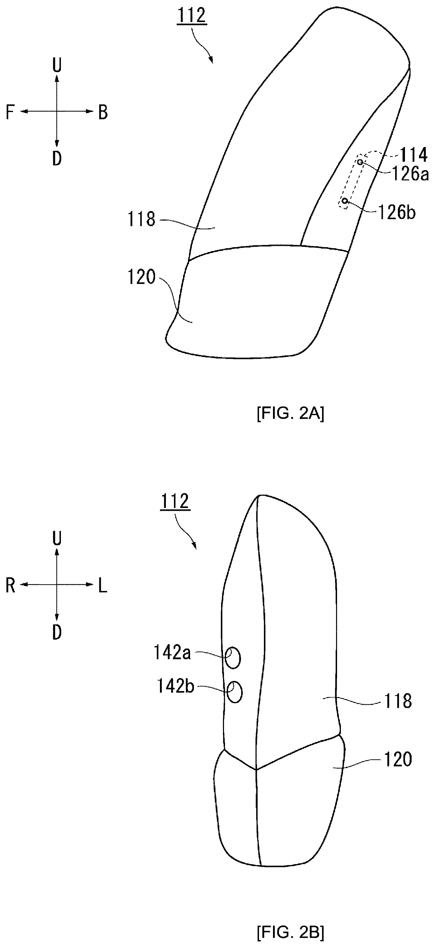

FIG. 2 is a diagram independently depicting the airbag cushion 112 of FIG. 1(b). FIG. 2(a) is a diagram depicting the airbag cushion 112 of FIG. 1(b) as viewed from the outside in the width direction of the seat 102.

The airbag cushion 112 of the present embodiment includes an upper chamber 118 and a lower chamber 120 as main portions for restraining the occupant.

The upper chamber 118 is an expansion part that restrains the area from the chest to the shoulders and abdomen of an occupant seated in the seat 102 in a normal orientation, and expands and deploys widely forward from the side frame 108 (see FIG. 1(b)).

The lower chamber 120 is an expansion part that restrains a waist part of an occupant seated in the seat 102 in a normal orientation. The lower chamber 120 expands and deploys along a seat cushion 105 of the seat 102 (see FIG. 1(b)) to at least an area below the upper chamber 118.

As depicted in FIG. 1(b), the airbag cushion 112 includes a pre-push chamber 122 as a portion that expands and deploys before the upper chamber 118 and the like. The pre-push chamber 122 is expanded and deployed in a state of protruding toward the center of the seatback 104 in the width direction relative to the upper chamber 118 and the like.

The pre-push chamber 122 is provided on the side of the occupant seated in the seat 102 as viewed from the upper chamber 118. The pre-push chamber 112 has an inflator 114 inserted therein, receives gas from the inflator 114 first, and expands and deploys before the chest main chamber 116 and the like, thereby pushing the occupant back toward the center of the seat 102. The upper chamber 118 and the lower chamber 120 receive gas that has passed through the pre-push chamber 122 and expand and deploy to broadly restrain the occupant's body.

FIG. 2(b) is a diagram depicting the airbag cushion 112 of FIG. 2(a) as viewed from the front of the seat 102 (see FIG. 1(b)). Vent holes 142a and 142b are provided at the front of the upper chamber 118, and gas that expands and deploys the upper chamber 118 is discharged to the outside through the vent holes 142a and 142b.

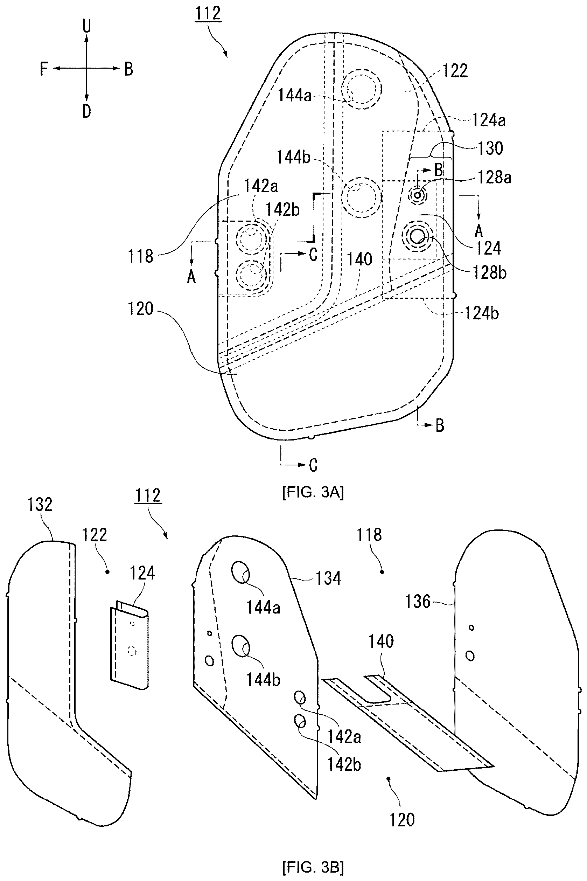

FIG. 3 is a diagram depicting the configuration of the panel member of the airbag cushion 112 of FIG. 2(a). FIG. 3(a) depicts a panel member of the airbag cushion 112 in accordance with FIG. 2(a).

The airbag cushion 112 is a bag shaped member and formed by overlapping and sewing or adhering a plurality of base materials configuring a front surface thereof, by spinning and weaving using an OPW (one-piece woven), or the like.

A diffuser 124 is provided at a portion that will be the rear side when the airbag cushion 112 is unfolded. The diffuser 124 is a cylindrical member into which the inflator 114 (see FIG. 2(a)) is inserted, and supplies gas into the pre-push chamber 122 from an upper end opening 124a, and into the lower chamber 120 from a lower end opening 124b. The diffuser 124 is provided inside the pre-push chamber 122 at a position rearward of the upper chamber 118.

The diffuser 124 is provided with bolt holes 128a and 128b through which two stud bolts 126a and 126b provided on the inflator 114 (see FIG. 2(a)) pass. The stud bolts 126a and 126b are exposed to the outside through the bolt holes 128a and 128b and are fastened to the side frame 108 (see FIG. 1(b)). This also attaches the airbag cushion 112 to the side frame 108.

Note that the diffuser 124 is assumed to be configured such that the stud bolts 126a and 126b are fastened to the side frame 108 (see FIG. 1(b)) from the center of the seat 102, but the stud bolts 126a and 126b can also be fastened to the side frame 108 from the outside.

A frame grounding part 130 is formed behind the main chamber 116. The frame grounding part 130 is a portion located on the width direction outward side of the pre-push chamber 122 and on the rear side of the upper chamber 118. The frame grounding part 130 is provided in a shape that conforms to the side frame 108 (see FIG. 1(b)) so that the pre-push chamber 122 receives a reaction force from the side frame 108.

FIG. 3(b) is an exploded view of each panel member of the airbag cushion 112 of FIG. 3(a). The airbag cushion 112 has, as main panel members, a pre-push panel 132, a partition panel 134, and a main panel 136.

The pre-push panel 132 is a panel that forms the outer surface of the pre-push chamber 122 (see FIG. 1(b)) and the lower chamber 120 on the width direction inward side of the seat 102, and is L-shaped. The diffuser 124 into which the inflator 114 (see FIG. 2(a)) is inserted, is disposed between the pre-push panel 132 and the partition panel 134.

The main panel 136 is disposed on the outer side in the width direction of the seat 102 (see FIG. 1(b)) as viewed from the pre-push panel 132, and forms the outer surfaces of the upper chamber 118 and the lower chamber 120 on the width direction outward side of the seat 102.

The partition panel 134 is disposed between the pre-push panel 132 and the main panel 136 and demarcates the pre-push chamber 122 (see FIG. 1(b)) and the upper chamber 118. The partition panel 134 has a shape in which the area of the lower chamber 120 is omitted compared to the main panel 136.

A baffle 140 is disposed between the main panel 136 and the partition panel 134. A baffle 140 spans the main panel 136 and the partition panel 134 to demarcate the upper chamber 118 (see FIG. 3(a)) from the lower chamber 120. The baffle 140 functions as a gas non-exchange partition part. The baffle 140 prevents gas from passing between the upper chamber 118 and the lower chamber 120, and gas cannot be exchanged between the upper chamber 118 and the lower chamber 120.

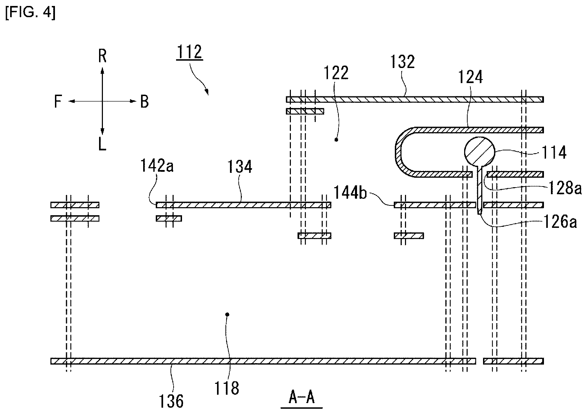

FIG. 4 is a cross-sectional view of the airbag cushion 112 of FIG. 3 along line A-A. The inflator 114 and a diffuser 124 are provided inside the pre-push chamber 122.

The pre-push chamber 122 is supplied with gas from the inflator 114 (see FIG. 2(a)) early on, and completes expansion and deployment rapidly, prior to the upper chamber 118 and the like. The pre-push chamber 122 pushes the occupant back toward the center of the seat 102 while pushing aside the seat pad and the like inside the seat 102 (see FIG. 1(a)) to ensure space for the upper chamber 118 and the like to expand and deploy.

The upper chamber 118 in FIG. 3(a) is provided so that at least a portion thereof is expanded and deployed in an area outside the pre-push chamber 122 when viewing the seat 102 externally in the width direction. The upper chamber 118 is connected to the pre-push chamber 122 by inner vents 144a and 144b.

As depicted in FIG. 4, the upper chamber 118 is supplied with gas from the inflator 114, through the pre-push chamber 122, and through the inner vent 144b and the like. Vent hole 142a and the like is provided on the front side of the upper chamber 118, and gas that expands and deploys the upper chamber 118 is discharged to the outside through the vent hole 142a and the like.

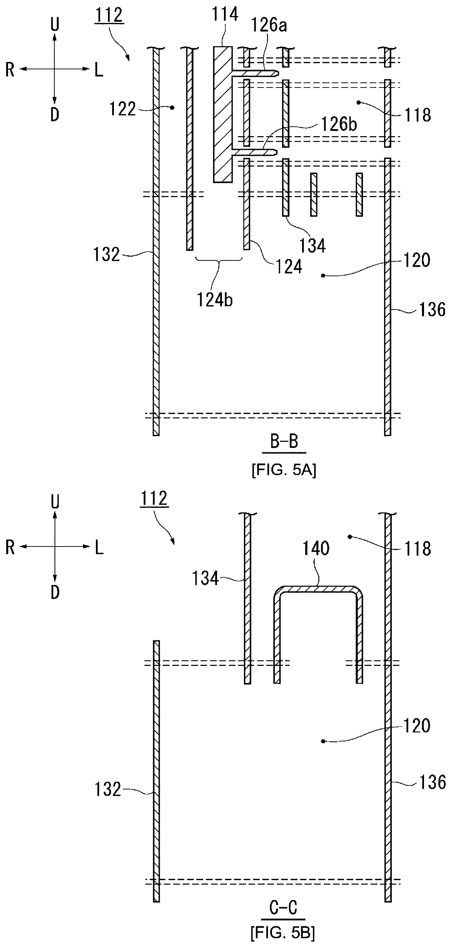

FIG. 5 is various cross-sectional views of the airbag cushion 112 of FIG. 3(a). FIG. 5(a) is a cross-sectional view of the airbag cushion 112 of FIG. 3 along line B-B. The lower end of a diffuser 124 is inserted into the lower chamber 120. The lower chamber 120 receives gas from the inflator 114 early through an lower end opening part 124b of the diffuser 124, and restrains the waist part of the occupant.

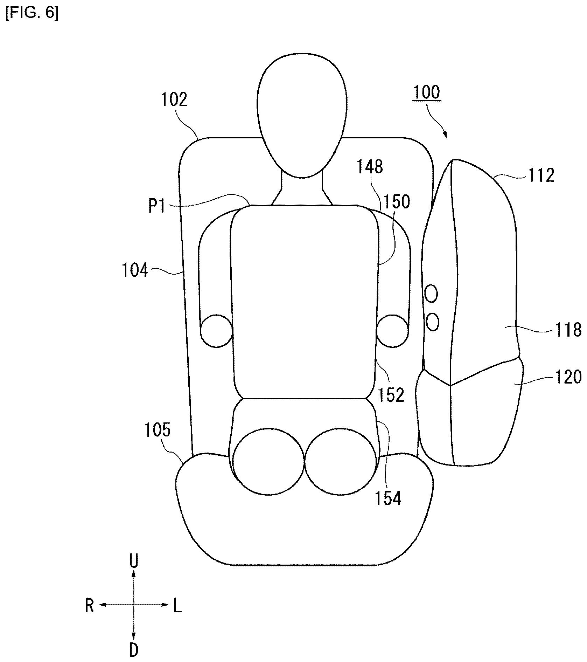

FIG. 5(b) is a cross-sectional view of the airbag cushion 112 of FIG. 3(b) along line C-C. The lower chamber 120 is thicker than the upper chamber 118 in the width direction of the seat 102 (see FIG. 6). The lower chamber 120 has a large capacity in the width direction of the seat 102, enabling suitable restraint of the waist part of a heavy occupant.

The baffle 140 is a panel member made of the same base fabric as the main panel 136 and the like, and is joined to the main panel 136 and the partition panel 134 by sewing. The upper chamber 118 and the waist part protection chamber 120 are demarcated by the baffle 140, and gas cannot pass between the upper chamber 118 and the lower chamber 120.

Note that although the baffle 140 is arranged so that the folds are positioned on the upper side in FIG. 5(b), arranging such that the folds are positioned on the lower side is also feasible.

FIG. 6 is a diagram depicting the positional relationship between the airbag cushion 112 of FIG. 2(b) and an occupant P1.

With the airbag cushion 112 of the present embodiment, the pre-push chamber 122 (see FIG. 1(b)) receives gas directly from upper end opening 124a of the diffuser 124 (see FIG. 3(a)), thereby expanding and deploying early and pushing the occupant P1 back toward the center of the seat 102. At the same time, the lower chamber 120 receives gas directly from the lower end opening 124b of the diffuser 124 and quickly expands and deploys, thereby fully restraining the waist 154 of the occupant P1. Furthermore, the upper chamber 118 receives gas via the pre-push chamber 122 and expands broadly, restraining the chest 150, shoulder 148, and abdomen 152 of the occupant P1.

With the airbag cushion 112 of the present embodiment, the upper chamber 118 and the lower chamber 120 are demarcated by the baffle 140 (see FIG. 5(b)), which is a gas non-exchange partition part, so that gas does not flow directly in either direction between the upper chamber 118 and the lower chamber 120. In particular, the lower chamber 120 receives gas directly from the diffuser 124, thereby the pressure quickly increases, and because the gas does not directly communicate with the upper chamber 118, the internal pressure can be maintained high without gas escaping to the upper chamber 118, and thus the heavy waist 154 can be fully restrained (see FIG. 6). Therefore, according to the present embodiment, the amount of movement of the occupant P1 from the seat 102 can be suppressed, and the occupant restraint performance of the airbag cushion 112 can be improved.

As depicted in FIG. 3(b), the airbag cushion 112 of the present embodiment preferably defines a pre-push chamber 122 (see FIG. 3(a)), an upper chamber 118, and a lower chamber 120 using panel members such as a pre-push panel 132, a main panel 136, and a partition panel 134, and a baffle 140 prevents gas from passing between the upper chamber 118 and the lower chamber 120. According to the configuration of the airbag cushion 112, the side airbag device 100 having high occupant restraint performance can be achieved with a simple configuration that suppresses the amount of panel members used, while suppressing manufacturing costs.

Note that in FIG. 3(b), additional panel members can be arranged along the edges of the main panel 136 and the partition panel 134. For example, by spanning an additional panel member between an upper edge of the main panel 136 and an upper edge of the partition panel 134, the thickness of the upper chamber 118 can be increased, and by spanning an additional panel member between a lower edge of the main panel 136 and a lower edge of the pre-push panel 132, the thickness of the lower chamber 120 can be increased.

### (Baffle of Modified Example)

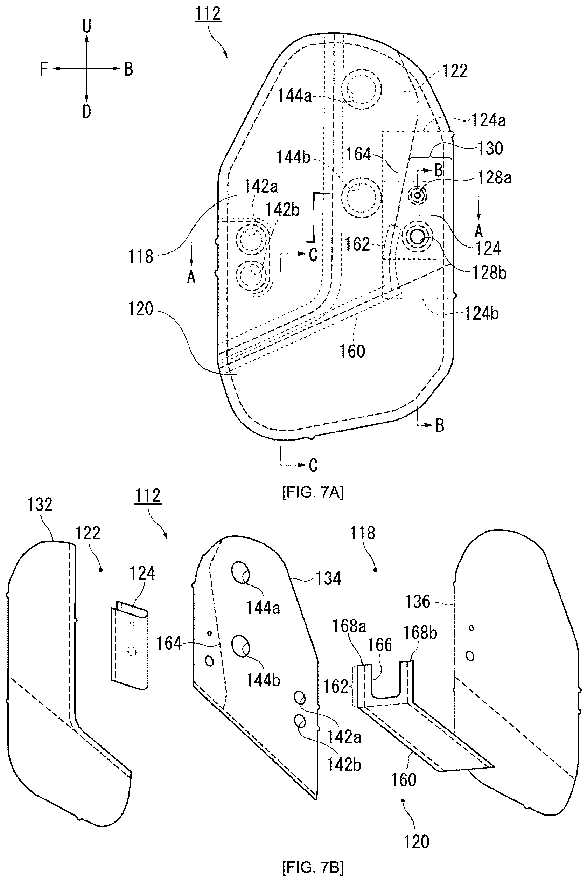

FIG. 7 is a diagram depicting a modified example (baffle 160) of the baffle 140 of FIG. 3. FIG. 7(a) is a diagram depicting the baffle 160 according to FIG. 3(a).

The baffle 160 also functions as a gas non-exchange partition part. The baffle 160 is installed in a state in which a rear end portion 162 is bent upward along a sewn part 164 that borders the front side of the frame grounding part 130 of the main chamber 116.

FIG. 7(b) is a diagram depicting the baffle 160 according to FIG. 3(b). The rear end portion 162 of the baffle 160 has a notch part 166 formed in the center as well as bifurcated side edge parts 168a, 168b. Side edge parts 168a, 168b have an elongated shape and do not expand after being overlapped and sewn along the sewn part 164, so that the thickness of the airbag cushion 112 when expanded and deployed can be suppressed.

As described above, by bending the rear end portion 162 of the baffle 160 upward and sewing the rear end portion to the sewn part 164, the thickness of the rear side of the airbag cushion 112 can be suppressed and the frame grounding part 130 can be suitably formed. Therefore, the airbag cushion 112 equipped with the baffle 160 can smoothly expand and deploy while grounded to the seat frame 106.

### (Modified Example Airbag Cushion)

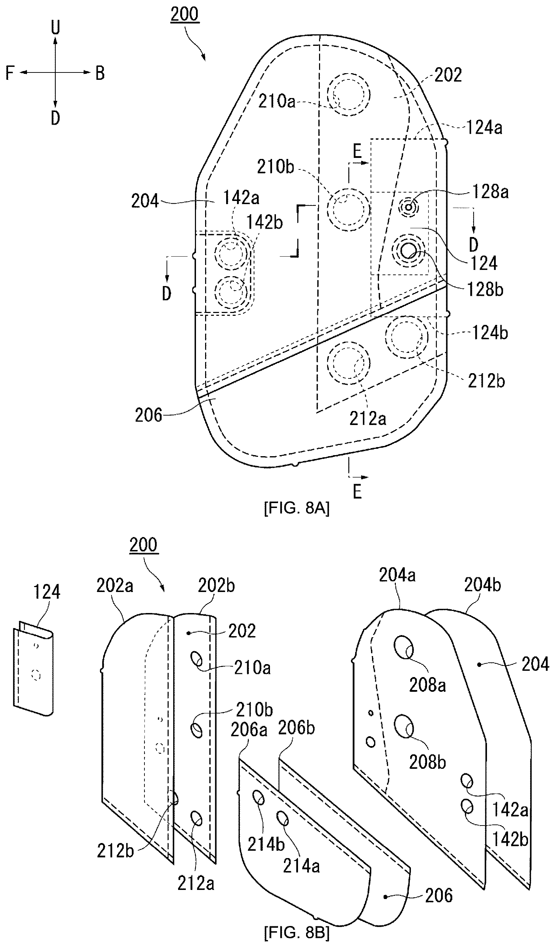

FIG. 8 is a diagram depicting Modified Example 1 of the airbag cushion in FIG. 3 (airbag cushion 200). In the description below, the same code will be provided for configuration elements that have already been described, and the description thereof is omitted. In addition, configuration elements with the same name as configuration elements already described have the same configuration and function even if a different reference is applied.

FIG. 8(a) is a diagram depicting the airbag cushion 200 corresponding to FIG. 3(a). The airbag cushion 200 also comprises a pre-push chamber 202, an upper chamber 204, and a lower chamber 206.

FIG. 8(b) is a diagram depicting the airbag cushion 200 corresponding to FIG. 3(b). The airbag cushion 200 has, as its main panel members, a pair of pre-push panels 202a and 202b, a pair of upper panels 204a and 204b, and a pair of lower panels 206a and 206b.

The pair of upper panels 204a and 204b are panel members that form the upper chamber 204 (see FIG. 8(a)), and are formed in a symmetrical shape. Of these, the upper panel 204a on the width direction inward side of the seat 102 (see FIG. 1(b)) is provided with upper inner vents 208a and 208b connected to the pre-push panel 202b, and vent holes 142a and 142b for discharging gas externally.

The pair of pre-push panels 202a and 202b are panel members that form the pre-push chamber 202 (see FIG. 8(a)), and are connected to the upper panels 204a and 204b on a width direction inward side of the seat 102. The pre-push panel 202b on the width direction outward side of the seat 102 is provided with upper inner vents 210a and 210b connected to the upper panel 204a and lower inner vents 212a and 212b connected to the lower panel 206a. The diffuser 124 is disposed between the pre-push panels 202a and 202b.

The pair of lower panels 206a and 206b are panel members that form the lower chamber 206 (see FIG. 8(a)), and are connected to the upper panels 204a and 204b on the width direction inward side below the pre-push panels 202a and 202b. The lower panel 206a on the width direction inward side of the seat 102 is provided with lower inner vents 214a and 214b that are connected to the pre-push panel 202b.

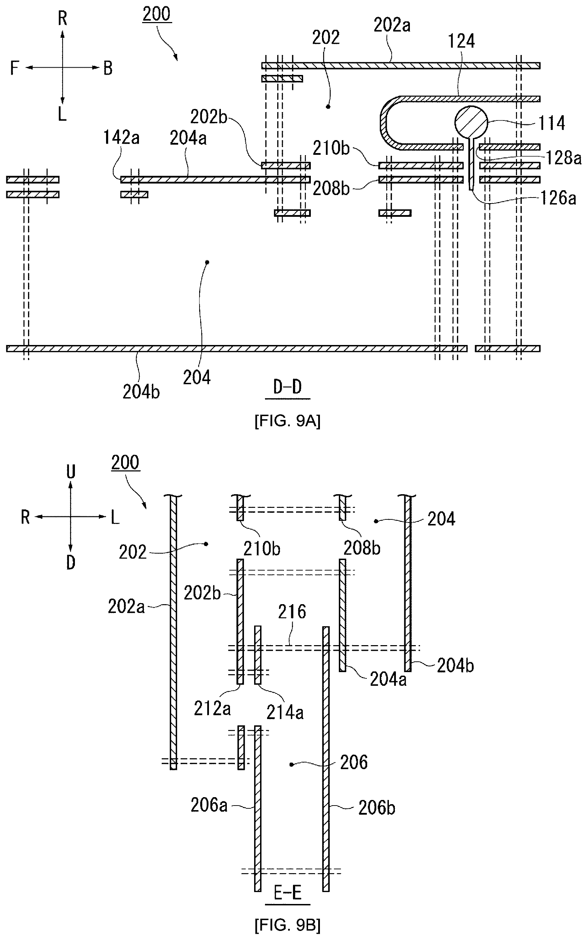

FIG. 9 is various cross-sectional views of the airbag cushion 200 of FIG. 8(a). FIG. 9(a) is a cross-sectional view of the airbag cushion 200 of FIG. 8(a) along line D-D. The upper chamber 204 is supplied with gas from the inflator 114 through the pre-push chamber 202 and through the upper inner vent 210a and the like.

FIG. 9(b) is a cross-sectional view of the airbag cushion 200 of FIG. 8(b) along line E-E. Gas from the inflator 114 (see FIG. 9(a)) is supplied to the lower chamber 206 through the pre-push chamber 202 and through the lower inner vent 212a and the like.

The upper edges of the lower panels 206a and 206b are joined together by a sewn part 216. The lower edges of the upper panels 204a and 204b are also joined together by sewn part 216. In other words, similar to the baffle 140 in FIG. 5(b), the sewn part 216 functions as a gas non-exchange partition part that demarcates the upper chamber 204 and the lower chamber 206, preventing gas from being exchanged therebetween, thereby preventing gas from passing between the upper chamber 204 and the lower chamber 206.

With this airbag cushion 200, the upper chamber 204 and the lower chamber 206 are also demarcated by the sewn part 216, which is a gas non-exchange partition part, so that gas does not flow directly in either direction between the upper chamber 204 and the lower chamber 206. Therefore, the lower chamber 206 is also not in direct gas communication with the upper chamber 204, and so is able to maintain a high internal pressure without allowing gas to escape to the upper chamber 204 side, enabling full restraint of the heavy waist 154 (see FIG. 6). Therefore, according to the present embodiment as well, the amount of movement of the occupant P1 from the seat 102 can be suppressed, and the occupant restraint performance of the airbag cushion 200 can be improved.

As depicted in FIG. 8(b), the airbag cushion 200 of the present embodiment can suitably form the pre-push chamber 202 (see FIG. 8(a)), the upper chamber 204, and the lower chamber 206 using a pair of symmetrically shaped panel members such as pre-push panels 202a and 202b, upper panels 204a and 204b, and lower panels 206a and 206b. The airbag cushion 200 also has a simple configuration with the panel members of each chamber having a uniform shape, achieving a side airbag device that provides high occupant restraint while suppressing manufacturing costs.

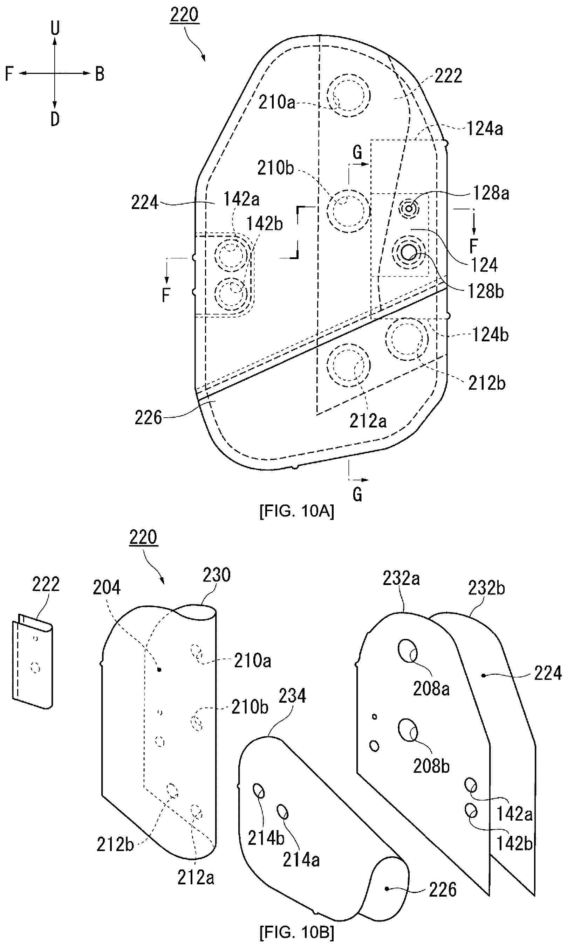

FIG. 10 is a diagram depicting Modified Example 2 of the airbag cushion 112 in FIG. 3 (airbag cushion 220).

FIG. 10(a) is a diagram depicting the airbag cushion 220 corresponding to FIG. 3(a). The airbag cushion 220 also comprises a pre-push chamber 222, an upper chamber 224, and a lower chamber 226.

FIG. 10(b) is a diagram depicting the airbag cushion 220 corresponding to FIG. 3(b). The airbag cushion 220 has, as main panel members, a pre-push panel 230, a pair of upper panels 232a and 232b, and a lower panel 234.

The pair of upper panels 232a and 232b are panel members that form the upper chamber 224 (see FIG. 10(a)). The upper inner vents 208a and 208b of the upper panel 204a are connected to the upper inner vents 210a and 210b of the pre-push panel 230.

The pre-push panel 230 is a panel member that forms the pre-push chamber 222 (see FIG. 10(a)), and is implemented as a single-piece panel member that is folded back at the front side. The pre-push panel 230 is connected to the upper panel 232a on the width direction inward side of the seat 102. In the pre-push panel 230, upper inner vents 210a and 210b connected to the upper panel 232a and lower inner vents 212a and 212b connected to the lower panel 234 are provided in a region toward the width direction outward side of the seat 102. The diffuser 124 is disposed inside the folded pre-push panel 230.

The lower panel 234 is a panel member that forms the lower chamber 226 (see FIG. 10(a)), and is implemented as a single-piece panel member that is folded back at the top. The lower panel 234 is connected to the upper panel 232a on a width direction inward side at a location below the pre-push panel 230. In the lower panel 234, lower inner vents 214a and 214b connected to the pre-push panel 230 are provided in a region on the width direction inward side of the seat 102.

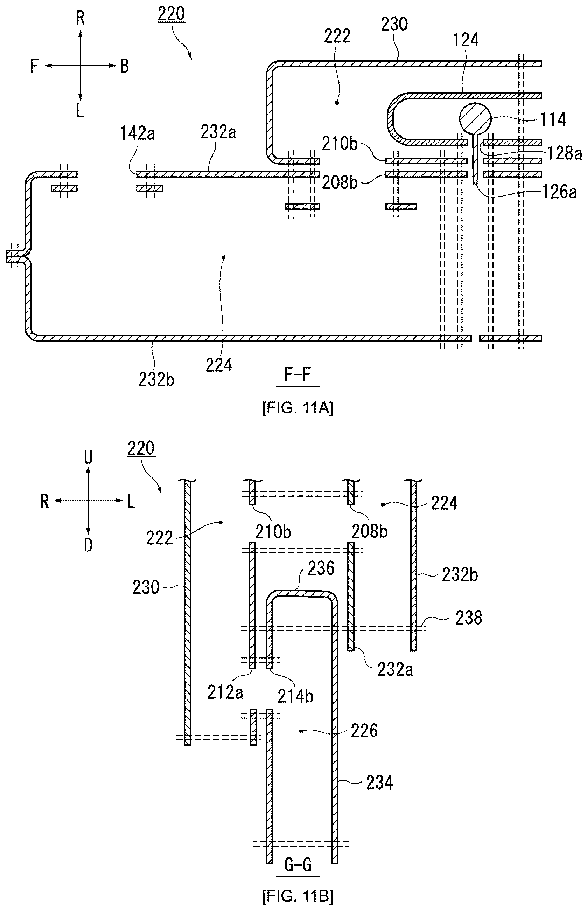

FIG. 11 is various cross-sectional views of the airbag cushion 220 of FIG. 10(a). FIG. 11(a) is a cross-sectional view of the airbag cushion 220 of FIG. 10(a) along line F-F. The gas of the inflator 114 is supplied to the upper chamber 224 through the pre-push chamber 222 and through the upper inner vent 210b and the like.

FIG. 11(b) is a cross-sectional view of the airbag cushion 220 of FIG. 10(a) along line G-G. The lower chamber 226 is supplied with gas from the inflator 114 through the pre-push chamber 222 and through the lower inner vent 212a.

The upper edge of the lower panel 234 is formed by a folded-back part 236. In addition, the lower edges of the upper panels 232a and 232b are joined by a sewn part 238. The folded-back part 236 and the sewn part 238 function, similarly to the baffle 140 in FIG. 5(b), as a gas non-exchange partition part that demarcates the upper chamber 224 and the lower chamber 226 and prevents gas exchange, whereby gas is unable to pass between the upper chamber 224 and the lower chamber 226.

In this airbag cushion 220, the upper chamber 224 and the lower chamber 226 are also demarcated by the folded-back part 236 and the sewn part 238, which is a gas non-exchange partition part, so that gas does not flow directly in either direction between the upper chamber 224 and the lower chamber 226. Therefore, the lower chamber 226 is also not in direct gas communication with the upper chamber 224, and so is able to maintain a high internal pressure without allowing gas to escape to the upper chamber 224 side, enabling full restraint of the heavy waist 154 (see FIG. 6). Therefore, according to the present embodiment as well, the amount of movement of the occupant P1 from the seat 102 can be suppressed, and the occupant restraint performance of the airbag cushion 220 can be improved.

As depicted in FIG. 10(b), the airbag cushion 220 of the present embodiment uses a single-piece panel folded back as the pre-push panel 230 and the lower panel 234, which enables suitable forming of the pre-push chamber 222 (see FIG. 10(a)), upper chamber 224, and lower chamber 226. The airbag cushion 220 is also configured such that each chamber is formed from a single-piece panel member, resulting in a simple structure, thereby enabling achieving of a side airbag device having high occupant-restraining performance while suppressing manufacturing costs.

Note that the upper panels 232a and 232b in FIG. 10(b) can be achieved by folding back a single-piece panel, similar to the pre-push panel 230 and the lower panel 234. For example, the upper panels 232a and 232b can be implemented as a single-piece upper panel with the front sides thereof connected together. This also enables achieving a panel member with a simple structure.

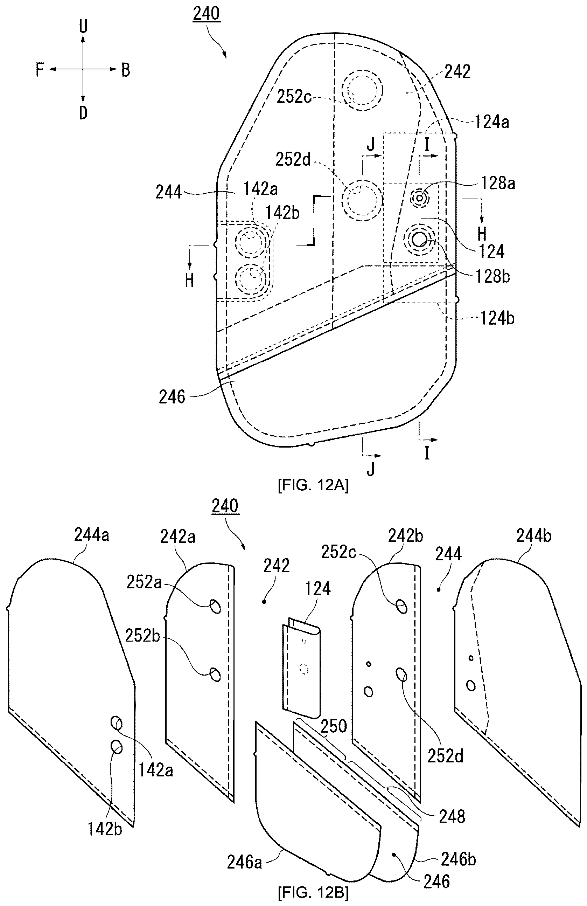

FIG. 12 is a diagram depicting Modified Example 3 of the airbag cushion 220 in FIG. 3 (airbag cushion 240).

FIG. 12(a) depicts an airbag cushion 240 corresponding to FIG. 3(a). The airbag cushion 240 also includes a pre-push chamber 242, an upper chamber 244, and a lower chamber 246.

FIG. 12(b) is a diagram depicting an airbag cushion 240 corresponding to FIG. 3(b). The airbag cushion 240 has, as main panel members, a pair of lower panels 246a and 246b, a pair of pre-push panels 242a and 242b, and a pair of upper panels 244a and 244b.

The pair of lower panels 246a and 246b are panel members that form a lower chamber 246 (see FIG. 12(a)). The upper edges of the lower panels 246a and 246b are joined together at the front by a sewn part 248, but a part of the rear is left open to form an opening part 250 into which the lower end of the diffuser 124 is inserted.

The pair of pre-push panels 242a and 242b are panel members that form the pre-push chamber 242 (see FIG. 12(a)), and are joined to the upper parts of the lower panels 246a and 246b on both sides in the width direction of the seat 102 (see FIG. 1(b)) so as to enclose the diffuser 124. The pre-push panels 242a and 242b are provided with inner vents 252a to 252d that supply gas to the upper chamber 244.

The pair of upper panels 244a and 244b are panel members that form the upper chamber 244 (see FIG. 12(a)), and are connected, with respect to the pre-push panels 242a and 242b, to upper parts of lower panels 246a and 246b from both sides in the width direction of the seat 102 (see FIG. 1(b)). An upper panel 244a is provided with vent holes 142a and 142b on the width direction inward side of the seat 102 for discharging gas externally.

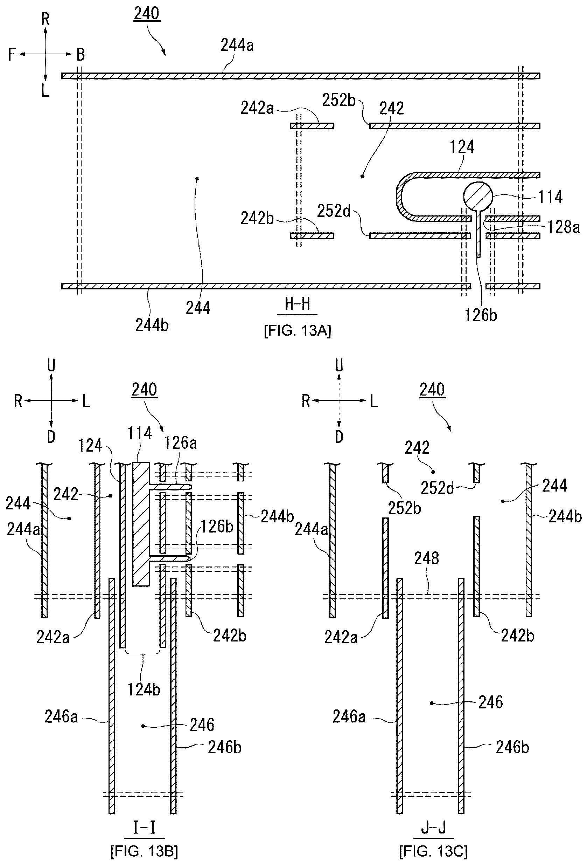

FIG. 13 depicts various cross-sectional views of the airbag cushion 240 of FIG. 12(a). FIG. 13(a) is a cross-sectional view of the airbag cushion 240 of FIG. 12(a) along line H-H.

The upper chamber 244 is formed to enclose the pre-push chamber 242 therein. Gas is supplied to the pre-push chamber 242 from an upper end opening 124a of the diffuser 124 (see FIG. 12(a)). The upper chamber 244 is supplied with gas through the inner vents 252a to 252d of the pre-push chamber 242.

FIG. 13(b) is a cross-sectional view of the airbag cushion 240 of FIG. 12(b) along line I-I. The lower end of the diffuser 124 is inserted into the lower chamber 246. The lower chamber 246 receives gas from the inflator 114 through the lower end opening 124b of the diffuser 124 early on and expands and deploys; thereby being able to restrain the waist 154 of the occupant P1 (see FIG. 6).

FIG. 13(c) is a cross-sectional view of the airbag cushion 240 of FIG. 12(b) along line J-J. The upper edges of the lower panels 246a and 246b are joined together by sewn part 248. In addition, the lower edges of the upper panels 244a and 244b are also joined together by sewn part 248. In other words, similar to the baffle 140 in FIG. 5(b), the sewn part 248 functions as a gas non-exchange partition part that demarcates the upper chamber 244 and the lower chamber 246, preventing gas from being exchanged therebetween, thereby preventing gas from passing between the upper chamber 244 and the lower chamber 246.

With the airbag cushion 240, the pre-push chamber 242 receives gas directly from the upper end opening 124a (see FIG. 12A) of the diffuser 124, expands and deploys early, and pushes the occupant P1 (see FIG. 6) back toward the center of the seat 102. At the same time, the lower chamber 246 also receives gas directly from the lower end opening 124b of the diffuser 124 (see FIG. 13(b)) and expands and deploys early, fully restraining the waist 154 of the occupant P1. Furthermore, the upper chamber 244 receives gas via the pre-push chamber 242 and expands broadly, restraining the chest 150, shoulder 148, and abdomen 152 of the occupant P1.

With this airbag cushion 240, the upper chamber 244 and the lower chamber 246 are also demarcated by the sewn part 248, which is a gas non-exchange partition part, so that gas does not flow directly in either direction between the upper chamber 244 and the lower chamber 246. In particular, the lower chamber 246 receives gas directly from the diffuser 124, thereby the pressure quickly increases, and because the gas does not communicate with the upper chamber 244, the internal pressure can be maintained high without gas escaping to the upper chamber 244, and thus the heavy waist 154 can be fully restrained (see FIG. 6). Therefore, according to the present embodiment, the amount of movement of the occupant P1 from the seat 102 can be suppressed, and the occupant restraint performance of the airbag cushion 240 can be improved.

As depicted in FIG. 12(b), the airbag cushion 240 of the present embodiment can suitably form the pre-push chamber 242 (see FIG. 12(a)), the upper chamber 244, and the lower chamber 246 using a pair of symmetrically shaped panel members such as pre-push panels 242a and 242b, upper panels 244a and 244b, and lower panels 246a and 246b. The airbag cushion 240 also has a simple configuration with the panel members of each chamber having a uniform shape, achieving a side airbag device that provides high occupant restraint while suppressing manufacturing costs.

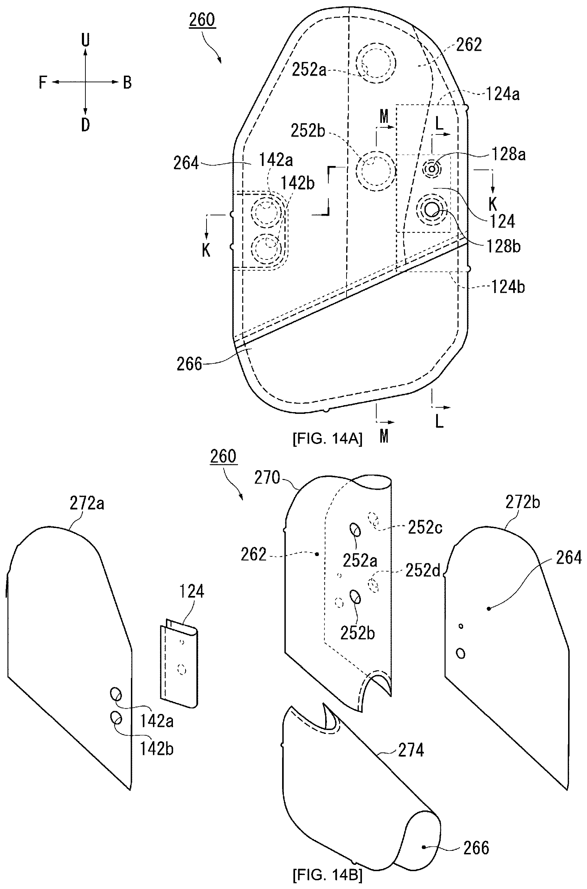

FIG. 14 is a diagram depicting Modified Example 4 of the airbag cushion 112 in FIG. 3 (airbag cushion 260).

FIG. 14(a) depicts an airbag cushion 260 corresponding to FIG. 3(a). The airbag cushion 260 also includes a pre-push chamber 262, an upper chamber 264, and a lower chamber 266.

FIG. 14(b) is a diagram depicting an airbag cushion 260 corresponding to FIG. 3(b). The airbag cushion 260 has, as main panel members, a lower panel 274, a pre-push panel 270, and a pair of upper panels 272a and 272b.

The lower panel 274 is a panel member that forms the lower chamber 266 (see FIG. 14(a)), and is implemented as a single-piece panel member that is folded back at the top. An opening 276 is provided on the rear side of the upper edge of the lower panel 274, and the lower end side of the diffuser 124 is inserted therein.

The pre-push panel 270 is a panel member that forms the pre-push chamber 262 (see FIG. 14(a)), and is implemented as a single-piece panel member that is folded back at the front side. The pre-push panel 270 is joined to the upper part of the lower panel 274 from both sides of the seat 102 (see FIG. 1B) in the width direction so as to enclose the diffuser 124 therein. The pre-push panel 270 is provided with inner vents 252a to 252d that supply gas to the upper chamber 264.

The pair of upper panels 272a and 272b are panel members that form the upper chamber 264 (see FIG. 14(a)), and are connected, with respect to the pre-push panel 270, to an upper part of a lower panel 274 from both sides in the width direction of the seat 102 (see FIG. 1(b)).

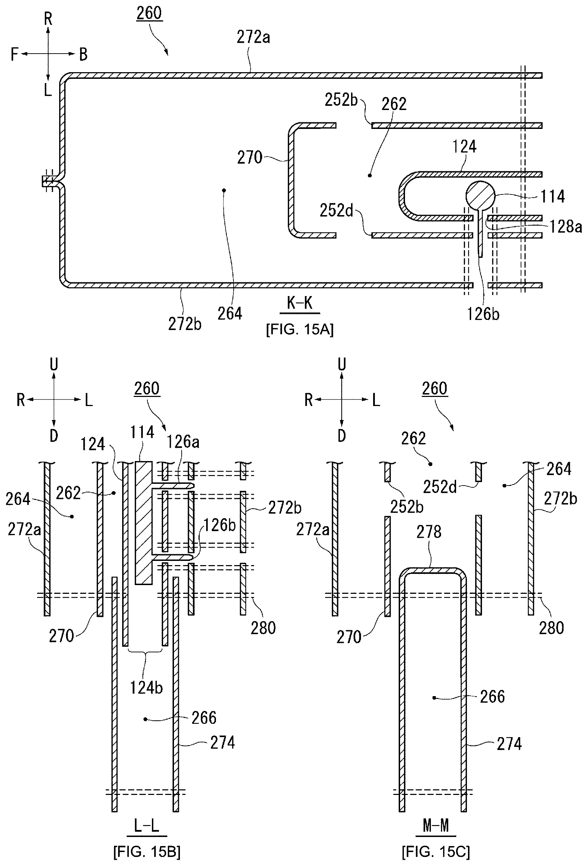

FIG. 15 is various cross-sectional views of the airbag cushion 260 of FIG. 14(a). FIG. 15(a) is a cross-sectional view of the airbag cushion 260 of FIG. 14(a) along line K-K.

The upper chamber 264 is formed to enclose the pre-push chamber 262 therein. Gas is supplied to the pre-push chamber 262 from an upper end opening 124a of the diffuser 124 (see FIG. 14(a)). The upper chamber 264 is supplied with gas through the inner vents 252a to 252d of the pre-push chamber 262.

FIG. 15(b) is a cross-sectional view of the airbag cushion 260 of FIG. 14(b) along line L-L. The lower end of the diffuser 124 is inserted into the lower chamber 266. The lower chamber 266 receives gas from the inflator 114 early through the lower end opening 124b of the diffuser 124, and restrains the waist 154 of the occupant P1 (see FIG. 6).

FIG. 15(c) is a cross-sectional view of the airbag cushion 260 of FIG. 14(b) along line M-M. The upper edge of the lower panel 274 is formed by a folded-back part 278. In addition, the lower edges of the upper panels 272a and 272b are joined by a sewn part 280. The folded-back part 278 and the sewn part 280 function, similarly to the baffle 140 in FIG. 5(b), as a gas non-exchange partition part that demarcates the upper chamber 264 and the lower chamber 266 and prevents gas exchange, whereby gas is unable to pass between the upper chamber 264 and the lower chamber 266.

With the airbag cushion 260, the pre-push chamber 262 receives gas directly from the upper end opening 124a of the diffuser 124, expands and deploys early, and pushes the occupant P1 (see FIG. 6) back toward the center of the seat 102. At the same time, the lower chamber 266 also receives gas directly from the lower end opening 124b of the diffuser 124 (see FIG. 15(b)) and expands and deploys early, fully restraining the waist 154 of the occupant P1. Furthermore, the upper chamber 264 receives gas via the pre-push chamber 262 and expands broadly, restraining the chest 150, shoulder 148, and abdomen 152 of the occupant P1.

In this airbag cushion 260, the upper chamber 264 and the lower chamber 266 are also demarcated by the folded-back part 278 and the sewn part 280, which is a gas non-exchange partition part, so that gas does not flow directly between the upper chamber 264 and the lower chamber 266. In particular, the lower chamber 266 receives gas directly from the diffuser 124, thereby the pressure quickly increases, and because the gas does not directly communicate with the upper chamber 264, the internal pressure can be maintained high without gas escaping to the upper chamber 264, and thus the heavy waist 154 can be fully restrained (see FIG. 6). Therefore, according to the present embodiment, the amount of movement of the occupant P1 from the seat 102 can be suppressed, and the occupant restraint performance of the airbag cushion 260 can be improved.

As depicted in FIG. 15(b), the airbag cushion 260 of the present embodiment uses a single-piece panel folded back as the pre-push panel 270 and the lower panel 274, which enables suitable forming of the pre-push chamber 262 (see FIG. 15(a)), upper chamber 264, and lower chamber 266. The airbag cushion 260 is also configured such that each chamber is formed from a single-piece panel member, resulting in a simple structure, thereby enabling achieving of a side airbag device having high occupant-restraining performance while suppressing manufacturing costs.

Note that the upper panels 272a and 272b in FIG. 14(b) can be achieved by folding back a single-piece panel, similar to the pre-push panel 270 and the lower panel 274. For example, the upper panels 272a and 272b can be implemented as a single-piece upper panel with the front sides thereof connected together. This also enables achieving a panel member with a simple structure.

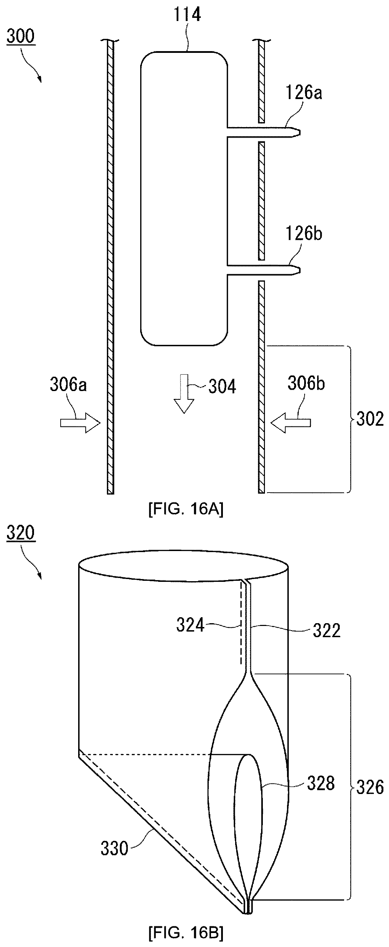

FIG. 16 is a diagram depicting various modified examples of the diffuser 124 in FIG. 5(a). FIG. 16(a) is a diagram depicting a diffuser 300 according to Modification 1.

The diffuser 300 is formed in a cylindrical shape using the same panel member as the main panel 136 (see FIG. 3(b)), and a surplus part 302 is provided at the lower end of the diffuser 300 that is larger than the range of the panel member that encloses the inflator 114.

When the inflator 114 starts to operate, the pressure 304 in the diffuser 300, as indicated by the arrow, is higher than pressure 306 in the lower chamber 120 (see FIG. 5(a)) (pressure 304 > pressure 306), so gas is supplied from the diffuser 300 into the lower chamber 120.

Furthermore, when the supply of gas from the inflator 114 ends and the occupant P1 (see FIG. 6) comes into contact with the lower chamber 120 and applies force, the pressure 306 in the lower chamber 120 becomes higher than the pressure in the diffuser 300 (pressure 304 < pressure 306). Herein, the surplus part 302 is pushed by the pressure 306 and contracts toward the inflator 114, functioning as a check valve to prevent backflow of gas into the diffuser 300.

As described above, by providing a surplus part 302 on the diffuser 300 and causing the surplus part to function as a check valve, backflow of gas from a lower chamber 120 (see FIG. 5(a)) to the pre-push chamber 122 and the upper chamber 118 via the diffuser 300 is prevented, thereby enabling internal pressure of the lower chamber 120 to be maintained at a high level during occupant restraint. Therefore, according to this modified example, the occupant restraint performance of the airbag cushion can be improved.

FIG. 16(b) is a diagram depicting a diffuser 320 according to Modification 2. The diffuser 320 is an elongated panel member having long sides 322 closed by stitching 324, and an opening 326 formed by opening the end part. In addition, by folding back a short side 328 of the panel member so as to be positioned inward, and forming the inner corner into an inclined part 330, gas can easily be discharged from the opening 326.

The diffuser 320 is arranged so that the opening 326 faces forward in the lower chamber 120 (see FIG. 5(a)), thereby enabling the lower chamber 120 to efficiently expand and deploy. Furthermore, by forming a prescribed range including the opening 326 as a surplus part that does not enclose the inflator 114 (see FIG. 16(a)), the diffuser 124 can function as a check valve that contracts toward the inflator 114 when pushed by the gas pressure in the lower chamber 120, preventing the backflow of gas, similar to the surplus part 302 in FIG. 16(a).

As described above, the diffuser 320 also efficiently expands and deploys the lower chamber 120 (see FIG. 5A), while preventing backflow of gas from the lower chamber 120 to the pre-push chamber 122 and the upper chamber 118 via the diffuser 320, thereby maintaining a high internal pressure in the lower chamber 120 when an occupant is restrained. Therefore, this modified example also enables improving the occupant restraint performance of the airbag cushion.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts depicted in detail in the attached drawings. Furthermore, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used in a vehicular side airbag device.

### DESCRIPTION OF CODES

100. Side airbag device, 102. Seat, 104. Seatback, 105. Seat cushion, 106. Seat frame, 108. Side frame, 110. Airbag module, 112. Airbag cushion, 114. Inflator, 118. Upper chamber, 120. Lower chamber,122. Pre-push chamber, 124. Diffuser, 124a, 124b. Opening, 126a, 126b. Stud bolt, 128a, 128b. Bolt hole, 130. Frame grounding part, 132. Pre-push panel, 134. Partition panel, 136. Main panel, 140. Baffle, 142a, 142b. Vent hole, 144a, 144b. Inner vent, 148. Shoulder, 150. Chest, 152. Abdomen, 154. Waist part, P1. Occupant, 160. Baffle, 162. Rear end portion, 164. Sewn part, 166. Notch part, 168a, 168b. Side edge part, 200. Airbag cushion, 202. Pre-push chamber, 202a, 202b. Pre-push panel, 204. Upper chamber, 204a, 204b. Upper panel, 206. Lower chamber, 206a, 206b. Lower panel, 208a, 208b. Upper inner vent, 210a, 210b. Upper inner vent, 212a, 212b. Lower inner vent, 214a, 214b. Lower inner vent, 216. Sewn part, 220. Airbag cushion, 222. Pre-push chamber, 224. Upper chamber, 226. Lower chamber, 230. Pre-push panel, 232a, 232b. Upper panel, 234. Lower panel,236. Folded-back part, 238. Sewn part, 240. Airbag cushion, 242. Pre-push chamber, 242a, 242b. Pre-push panel, 244. Upper chamber, 244a, 244b. Upper panel, 246. Lower chamber, 246a, 246b. Lower panel, 248. Sewn part, 252a, 252b. Inner vent, 260. Airbag cushion, 262. Pre-push chamber, 264. Upper chamber, 266. Lower chamber, 270. Pre-push panel, 272a, 272b. Upper panel, 274. Lower panel, 276. Opening, 278. Folded-back part, 280. Sewn part, 300. Diffuser, 302. Surplus part, 304. Pressure, 306. Pressure, 320. Diffuser, 322. Long side, 324. Stitching, 326. Opening, 328. Opening, 330. Inclined part.

## Claims

1. A vehicle side airbag device comprising:
an airbag module attached to a side frame of a seatback of a vehicle seat;
wherein
the airbag module includes:
an airbag cushion attached to the side frame in a prescribed rolled or folded stowed form; and
an inflator attached to the side frame in a state of being inserted into the airbag cushion,
the airbag cushion includes:
a pre-push chamber into which the inflator is inserted;
an upper chamber that expands and deploys at least partially in a range outside the pre-push chamber in a width direction of the vehicle seat;
an inner vent that supplies gas from the pre-push chamber to the upper chamber;
a lower chamber that receives gas from the pre-push chamber and expands and deploys to at least a range below the upper chamber; and
a gas non-exchange partition part that demarcates the upper chamber and the lower chamber and prevents gas exchange between the upper chamber and the lower chamber.

2. The vehicle side airbag device according to claim 1, wherein
the airbag cushion further includes:
a pre-push panel that forms outer surfaces of the pre-push chamber and the lower chamber on a width direction inward side of the vehicle seat;
a main panel that is disposed on the width direction outward side relative to the pre-push panel and forms outer surfaces of the upper chamber and the lower chamber on the width direction outward side; and
a partition panel that is disposed between the pre-push panel and the main panel and demarcates the pre-push chamber and the upper chamber.

3. The vehicle side airbag device according to claim 2, wherein the gas non-exchange partition part includes a baffle spanning between the main panel and the partition panel, the baffle demarcating the upper chamber and the lower chamber and preventing gas from passing therebetween.

4. The vehicle side airbag device according to claim 1, wherein
the airbag cushion further includes:
one or more upper panels that form the upper chamber;
one or more pre-push panels that are connected to the one or more upper panels from a width direction inward side of the vehicle seat and form the pre-push chamber; and
one or more lower panels that are connected to the one or more upper panels from the width direction inward side and form the lower chamber.

5. The vehicle side airbag device according to claim 1, wherein
the airbag cushion further includes:
one or more lower panels that form the lower chamber;
one or more pre-push panels that are connected above the one or more lower panels from both width-direction sides of the vehicle seat and form the pre-push chamber; and
one or more upper panels that are connected above the one or more lower panels from the width direction outward side relative to the one or more pre-push panels and form the upper chamber in a state so as to enclose the pre-push chamber.

6. The vehicle side airbag device according to any one of claims 1 to 5, wherein
the airbag cushion further includes:
a diffuser provided in a state in which the inflator is enclosed within the pre-push chamber, one end of the diffuser being inserted into the lower chamber, and the diffuser being formed in a cylindrical shape, and
a check valve that is a surplus of the panel member provided at a first end of the diffuser to prevent backflow of gas.
